(19) Europäisches Patentamt

European Patent Office

Office européen des brevets

(11) **EP 1 577 345 A1**

(12) **EUROPEAN PATENT APPLICATION**
published in accordance with Art. 158(3) EPC

(43) Date of publication:
**21.09.2005 Bulletin 2005/38**

(51) Int Cl.⁷: **C08L 67/00**

(21) Application number: **03758978.5**

(86) International application number:
**PCT/JP2003/013761**

(22) Date of filing: **28.10.2003**

(87) International publication number:
**WO 2004/039887 (13.05.2004 Gazette 2004/20)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **29.10.2002 JP 2002314667**

(71) Applicant: **KANEKA CORPORATION
Osaka-shi, Osaka 530-8288 (JP)**

(72) Inventors:
• **SUNAGAWA, Takenobu
Toyonaka-shi, Osaka 561-0872 (JP)**

• **TONE, Hiroshi
Tarumi-ku, Kobe-shi, Hyogo 655-0872 (JP)**
• **SAKAMOTO, Hideyuki
Takasago-shi, Hyogo 676-0026 (JP)**
• **NAKANISHI, Yasushi
Takasago-shi, Hyogo 676-0026 (JP)**
• **KADOKURA, Mamoru
Himeji-shi, Hyogo 671-1242 (JP)**

(74) Representative: **Vossius & Partner
Siebertstrasse 4
81675 München (DE)**

(54) **THICKENER FOR THERMOPLASTIC POLYESTER RESIN, THERMOPLASTIC POLYESTER RESIN COMPOSITION CONTAINING THE SAME, AND MOLDED OBJECT OBTAINED THEREFROM**

(57)    0.1 to 50 parts of a viscosity modifier for thermoplastic polyester resin comprising (a) 15 to 95 % by weight alkyl (meth)acrylate containing an epoxy group, (b) 5 to 85 % by weight of another alkyl (meth)acrylate and (c) 0 to 80 % by weight of another vinyl monomer copolymerizable therewith and having weight average molecular weight of 1,000 to 400,000 is compounded, based on 100 parts by weight of a thermoplastic polyester resin. As a result, melt viscosity of thermoplastic polyester resin can be efficiently improved, stable processability is exhibited in extrusion molding, blow molding and calender molding, particularly profile extrusion and extrusion molding of boards and pipes which are extremely difficult, and a molded article having favorable surface properties is obtained.

**Description**

TECHNICAL FIELD

The present invention relates to a viscosity modifier for thermoplastic polyester resin for improving mold proccesability in extrusion molding, calender molding, blow molding and injection molding of thermoplastic polyester resin, particularly in profile extrusion and extrusion molding of boards and pipes, and thermoplastic polyester resin composition containing the viscosity modifier having excellent mold processability. Also, the present invention relates to a molded article comprising the same.

BACKGROUND ART

Thermoplastic polyester resin is a polymer that is excellent in physical properties such as transparency, mechanical properties, gas barrier properties and heat resistance, chemical properties such as solvent resistance, acid resistance and alkali resistance, economical efficiency and recyclability and is widely used in various fields, mainly as packaging material such as bottles. Particularly, recently, studies are been conducted regarding use of thermoplastic polyester resin for extrusion such as profile extrusion and extrusion molding of sheets and films, utilizing the surface properties thereof.

On the other hand, among thermoplastic polyester resins, crystalline thermoplastic polyester resin such as polyethylene terephthalate and polybutylene terephthalate are generally largely temperature dependent with respect to melt viscosity and have low melt viscosity in melt processing such as injection molding and extrusion molding conducted in a temperature range of the melting point or higher, thus being disadvantageous in terms of processability.

In order to improve mold processability of thermoplastic polyester resin, conventionally, studies have been conducted regarding compounding a copolymer having compatibility with such resins as a melt viscosity adjuster.

For example, disclosed are the method of compounding a copolymer having weight average molecular weight of at least 500,000 and comprising a specific (meth)acrylic ester to thermoplastic resin (see JP-A-1-268761), the method of compounding a copolymer having weight average molecular weight of 1,000,000 to 4,000,000 and comprising styrene, glycidyl methacrylate and (meth)acrylic ester to thermoplastic polyester resin (see JP-A-6-41376) and the method of compounding a vinyl copolymer containing at least 5 % by weight of glycidyl methacrylate to polyethylene terephthalate (see JP-A-62-187756). However, significant increase in melt viscosity of the thermoplastic polyester resin compositions was not observed and stable moldability could not sufficiently be achieved in profile extrusion and extrusion molding of boards and pipes.

Also, the method of adding polyglycidyl methacrylate having weight average molecular weight of at least 900 is disclosed (see JP-A-62-149746). However, although significant increase in melt viscosity was observed, there were problems such as shrinking and insufficient gloss of the obtained molded article.

Consequently, improvement of mold processability in extrusion molding for poor drawing properties and poor dimensional accuracy, such as uneven thickness, and improvement in surface properties, such as shrinking, poor gloss and surface roughness of the molded article, are strongly desired.

DISCLOSURE OF INVENTION

In this way, the object of the present invention is to provide a viscosity modifier for thermoplastic polyester resin, which significantly increases melt viscosity of thermoplatic polyester resin, enables stable extrusion molding, blow molding and calender molding, particularly profile extrusion and extrusion molding of boards and pipes which are extremely difficult, and gives a molded article having excellent surface properties, a thermoplastic polyester resin composition containing the viscosity modifier and a molded article comprising the same.

As a result of intensive studies based on the present situation, the present inventors have found that by copolymerizing a mixture of specific types and amounts of monomers so that the weight average molecular weight is within a specific range and using the obtained copolymer as a viscosity modifier for thermoplastic polyester resin, a significant effect of improving viscosity unattainable in the prior art is obtained and the above problems are solved. Thus, the present invention was achieved.

That is, the present invention relates to a viscosity modifier for thermoplastic polyester resin comprising

(a) 15 to 95 % by weight of alkyl (meth)acrylate containing an epoxy group,
(b) 5 to 85 % by weight of another alkyl (meth)acrylate and
(c) 0 to 80 % by weight of another vinyl monomer copolymerizable therewith; and

having weight average molecular weight of 1,000 to 400,000.

The present invention also relates to a thermoplastic polyester resin composition comprising 0.1 to 50 parts by weight of the viscosity modifier for thermoplastic polyester resin, based on 100 parts by weight of a thermoplastic polyester resin.

Furthermore, the present invention relates to a molded article comprising the thermoplastic polyester resin composition and a molded article obtained by extrusion molding the thermoplastic polyester resin composition.

BEST MODE FOR CARRYING OUT THE INVENTION

The viscosity modifier for thermoplastic polyester resin of the present invention comprises (a) 15 to 95 % by weight of alkyl (meth)acrylate containing an epoxy group, (b) 5 to 85 % by weight of another alkyl (meth)acrylate and (c) 0 to 80 % by weight of another vinyl monomer copolymerizable therewith and has weight average molecular weight of 1,000 to 400,000. As a result, the melt viscosity of thermoplastic polyester resin can be improved to a level at which profile extrusion and extrusion molding of boards and pipes can be conducted.

Specific examples of alkyl (meth)acrylate containing an epoxy group (a) are acrylates containing an epoxy group such as glycidyl acrylate and methacrylates containing an epoxy group such as glycidyl methacrylate. These can be used alone or two or more kinds can be used together.

The content of alkyl (meth)acrylate containing an epoxy group (a) is 15 to 95 % by weight, preferably 20 to 95 % by weight, more preferably 30 to 95 % by weight, in the viscosity modifier for thermoplastic polyester resin. When the content is less than 15 % by weight, melt viscosity cannot sufficiently be increased and stable processability may not be obtained. When the content is more than 95 % by weight, the melt viscosity becomes too high and the obtained molded article tends to shrink and lack gloss.

Specific examples of the other alkyl (meth)acrylate (b) are alkyl acrylates containing an alkyl group having 1 to 8 carbon atoms such as 2-ethyl hexyl acrylate, butyl acrylate, ethyl acrylate and methyl acrylate and alkyl methacrylates containing an alkyl group having 1 to 8 carbon atoms such as 2-ethylhexyl methacrylate, butyl methacrylate, ethyl methacrylate and methyl methacrylate. These can be used alone or two or more kinds can be used together.

The content of the other alkyl (meth)acrylate (b) is 5 to 85 % by weight, preferably 5 to 80 % by weight, more preferably 5 to 70 % by weight in the viscosity modifier for thermoplastic polyester resin. When the content is outside this range, melt viscosity cannot sufficiently be increased and stable processability may not be obtained.

Specific examples of the other vinyl monomer (c) copolymerizable with the alkyl (meth)acrylate containing an epoxy group and alkyl (meth)acrylate are aromatic vinyls such as styrene, $\alpha$-methylstyrene and chlorostyrene and vinyl cyanides such as acrylonitrile and methacrylonitrile. These can be used alone or two or more kinds can be used together.

The content of the other vinyl monomer (c) is 0 to 80 % by weight, preferably 0 to 75 % by weight, more preferably 0 to 65 % by weight in the viscosity modifier for thermoplastic polyester resin. When the content is more than 80 % by weight, melt viscosity cannot sufficiently be increased and stable processability may not be obtained.

The weight average molecular weight of the viscosity modifier for thermoplastic polyester resin of the present invention is 1,000 to 400,000, preferably 1,000 to 200,000, more preferably 1,000 to 100,000. When the weight average molecular weight is less than 1,000, obtaining powder from the latex after polymerization tends to become difficult. When the weight average molecular weight is more than 400,000, dispersibility in the thermoplastic polyester resin decreases and as a result, the effect of improving viscosity may not sufficiently be obtained.

The process for preparing the viscosity modifier for thermoplastic polyester resin of the present invention is not particularly limited. For example, the viscosity modifier can be prepared by methods such as suspension polymerization and emulsion polymerization and of these, emulsion polymerization is preferable.

When the viscosity modifier is prepared by emulsion polymerization, the monomer mixture is emulsion polymerized in the presence of a suitable medium, emulsifier, chain transfer agent and polymerization initiator.

The medium used in emulsion polymerization is usually water.

As the emulsifier, known emulsifiers are used. Examples are anionic surfactants such as fatty acid salt, alkyl sulfate, alkyl benzene sulfonate, alkyl phosphate and sulfosuccinate diester and nonionic surfactants such as polyoxyethylene alkyl ether and polyoxyethylene fatty acid ester.

The polymerization initiator is not particularly limited and aqueous and oil-soluble polymerization initiators are used. For example, common inorganic polymerization initiators such as persulfates, organic peroxides or azo compounds can be used alone or these initiator compounds can be combined with sulfites, thiosulfates, primary metal salts or sodium formaldehyde sulfoxylate and used as a redox-type initiator. Preferable examples of persulfates are sodium persulfate, potassium persulfate and ammonium persulfate. Preferable examples of organic peroxides are t-butyl hydroperoxide, cumene hydroperoxide, benzoyl peroxide and lauroyl peroxide.

The chain transfer agent is not particularly limited and for example, alkyl mercaptans such as t-dodecyl mercaptan, n-dodecyl mercaptan, t-decyl mercaptan, n-decyl mercaptan and n-octyl mercaptan and alkyl ester mercaptan such as 2-ethyl hexyl thioglycolate can be used.

The temperature and time of the polymerization reaction are not particularly limited and can be adjusted accordingly in order to obtain the desired weight average molecular weight depending on the intended use.

The viscosity modifier for thermoplastic polyester resin of the present invention can be a one-step polymer or a multi-step polymer such as a two-step polymer or a three-step polymer. In the case that polymerization is conducted by two-step polymerization, by adding the monomers of the second step onward after confirming that polymerization of the first step has been completed, polymerization of the second step can be conducted without mixing with the monomers of the first step.

The particles in the polymer latex obtained in this way usually have average particle size of about 100 to 3000 Å and are collected from the latex by the usual method of salting out or coagulating by adding an electrolyte or by spraying in hot air and drying. Also, when necessary, washing, dehydrating and drying by the usual methods are conducted.

Examples of the thermoplastic polyester resin used in the present invention are resins obtained by polycondensation of an aromatic dicarboxylic acid component and a diol component. Examples of the dicarboxylic acid are aromatic dicarboxylic acids having terephthalic acid or alkyl ester thereof as the main component and examples of the diol are diols having alkylene glycol as the main component.

The thermoplastic polyester resin is not particularly limited and conventionally used polyester resin and recycled polyester resin can be used. Examples are aromatic polyesters such as polyethylene terephthalate, polybutylene terephthalate, polycyclohexane terephthalate and polyethylene naphthalate and aromatic copolyesters such as PETG (polyethylene terephthalate modified by glycol) including poly(ethylene-co-1,4-cyclohexanedimethyleneterephthalate).

The compounding ratio of the thermoplastic polyester resin and the viscosity modifier for thermoplastic polyester resin in the thermoplastic polyester resin composition of the present invention can be a wide range and is preferably 0.1 to 50 parts by weight, more preferably 2 to 30 parts by weight, further preferably 2 to 10 parts by weight, of the viscosity modifier for thermoplastic polyester resin based on 100 parts by weight of the thermoplastic polyester resin. When the amount of the viscosity modifier for thermoplastic polyester resin is less than 0.1 part by weight, melt viscosity cannot sufficiently be increased and stable processability may not be obtained. When the amount is more than 50 parts by weight, melt viscosity becomes too high and the obtained molded article tends to shrink and lack gloss.

The process for preparing the resin composition of the present invention is not particularly limited and known methods can be employed. For example, the method of obtaining the resin composition by mixing the thermoplastic polyester resin and the viscosity modifier for thermoplastic polyester resin in advance using a Henschel mixer or a tumbler and thereafter, melt kneading using a single-screw extruder, twin-screw extruder, banbury mixer or heating roll can be employed.

A master batch, in which the viscosity modifier for thermoplastic polyester resin is mixed in a high concentration of more than 50 parts by weight based on 100 parts by weight of the thermoplastic polyester resin, can be prepared in advance and then in actual mold processing, the master batch can be used by mixing and diluting with thermoplastic polyester resin, so that the amount of the viscosity modifier becomes the desired amount within the range of 0.1 to 50 parts by weight.

Furthermore, when necessary, to the thermoplastic polyester resin composition of the present invention, other additives such as spreading agents, lubricants, impact modifiers, plasticizers, colorants and foaming agents can be added alone or two or more kinds can be added together.

The process for obtaining a molded article from the thermoplastic polyester resin composition of the present invention is not particularly limited and commonly used molding methods can be employed, such as extrusion molding, blow molding and calender molding. Even in extrusion molding which requires higher melt viscosity than in melt processing , stable processability is exhibited and a molded article having favorable surface properties is obtained.

Hereinafter, the present invention is explained in detail based on Examples and Comparative Examples, but not limited thereto. In the following descriptions, "part(s)" represents "parts by weight". Glycidyl methacrylate is abbreviated as GMA, glycidyl acrylate is abbreviated as GA, methyl methacrylate is abbreviated as MMA, butyl acrylate is abbreviated is BA, butyl methacrylate is abbreviated as BMA, styrene is abbreviated as ST, acrylonitrile is abbreviated as AN, ethylene is abbreviated as ET, vinyl acetate is abbreviated as VA and tert-dodecyl mercaptan is abbreviated as TDM.

The evaluation methods used in the following Examples and Comparative Examples are described below.

(Measurement of polymerization conversion ratio)

The polymerization conversion ratio is calculated from the following formula.

Polymerization conversion ratio (%) =

amount of produced polymers/ amount of charged monomers x 100

(Measurement of weight average molecular weight)

The weight average molecular weight is found by gel permeation chromatography based on polymethyl methacrylate.

(Preparation of pellets)

A mixture of 100 parts of polyethylene terephthalate (available from Mitsubishi Chemical Corporation, NOVAPEX GM-330, intrinsic viscosity: 0.65) dried for 5 hours at 140°C and 5 parts of the polymer sample is melt kneaded using a 44 mm twin-screw extruder (TEX 44) available from Japan Steel Works, Ltd. under the following conditions (cylinder temperature, screw rotation speed, discharge amount, die diameter) to prepare pellets.
Cylinder temperature: C1 = 230°C, C2 = 240°C, C3 = 240°C, C4 = 250°C, C5 = 260°C, C6 = 260°C, die = 270°C
Screw rotation speed: 100 rpm
Discharge amount: 20 kg/hr
Die diameter: 3 mmφ

(Evaluation of gloss of molded article surface)

The gloss of the molded article surface is measured with respect to the surface of a flat board molded article obtained by extrusion molding using a glossmeter (made by BYK-Gardner, Microgloss 60°) at an incident angle and light receiving angle of 60°. The gloss value is assumed to be an index of the surface properties of the molded article.

(Evaluation of anti-draw down effect)

The above pellets are extrusion molded under the following conditions (cylinder temperature, screw rotation speed, discharge amount) using a 20 mm single screw extruder made by Toyo Seiki Seisaku-sho, Ltd. The melted resin discharged from the die outlet is drawn and the length of the resin at which it can no longer endure its own weight and begins to draw down is measured. The anti-draw down effect is evaluated based on the drawing distance, as an index of drawing ease in extrusion molding.
The extrusion molding conditions are as follows.
Cylinder temperature: C1 = 250°C, C2 = 270°C, C3 = 270°C, die = 250°C
Screw rotation speed: 50 rpm
Discharge amount: 3 kg/hr
Die diameter: 5 mmφ

EXAMPLE 1

An 8 liter reaction vessel equipped with a stirrer and a cooler was charged with 200 parts of distilled water and 0.5 part of sodium dioctylsulfosuccinate. Subsequently, after the inside of the vessel was replaced with nitrogen, the temperature of the reaction vessel was increased to 70°C while stirring. Thereafter, 0.2 part of potassium persulfate was added and after stirring for 15 minutes, a mixture containing 15 parts of GMA, 60 parts of MMA, 15 parts of BA and 1.0 part of TDM was added continuously over 4 hours. One hour after adding, 3 parts of MMA and 7 parts of BA were added continuously over 1 hour. After adding, the mixture was stirred for 1 more hour and then cooled to obtain a latex. The polymerization conversion ratio was 99.8%.
The obtained latex was salted out with an aqueous solution of calcium chloride and after the temperature was increased to 90°C and thermal treatment was conducted, the latex was filtered using a centrifugal dehydrator. A dehydrated cake of the obtained copolymer was washed with water and dried for 15 hours at 50°C by a parallel flow dryer to obtain a white powdery sample of the two-step polymer (1).

EXAMPLES 2 to 5

The weight average molecular weight was adjusted to about 50,000 by adding 1.0 part of the chain transfer agent TDM. The two-step polymer samples (2) to (5) were obtained in the same manner as in Example 1, except that the composition ratio of GMA, MMA and BA was as shown in Table 1.

EXAMPLE 6

An 8 liter reaction vessel equipped with a stirrer and a cooler was charged with 200 parts of distilled water and 0.5 part of sodium dioctylsulfosuccinate. Subsequently, after the inside of the vessel was replaced with nitrogen, the temperature of the reaction vessel was increased to 70°C while stirring. Thereafter, 0.2 part of potassium persulfate was added and after stirring for 15 minutes, a mixture containing 90 parts of GMA, 3 parts of MMA, 7 parts of BA and 1.0 part of TDM was added continuously over 4.5 hours. After adding, the mixture was stirred for 1 more hour and then cooled to obtain a latex. The polymerization conversion ratio was 99.4 %.

The obtained latex was salted out with an aqueous solution of calcium chloride and after the temperature was increased to 90°C and thermal treatment was conducted, the latex was filtered using a centrifugal dehydrator. A dehydrated cake of the obtained copolymer was washed with water and dried for 15 hours at 50°C by a parallel flow dryer to obtain a white powdery sample of the one-step polymer (6).

COMPARATIVE EXAMPLES 1 to 5

The weight average molecular weight was adjusted to about 50,000 by adding 1.0 part of the chain transfer agent TDM. The two-step polymer samples (7) to (10) were obtained in the same manner as in Example 1, except that the composition ratio of GMA, MMA and BA was shown in Table 1. Also, a one-step polymer sample (11) was obtained in the same manner as in Example 6.

Evaluation of the anti-draw down effect and surface gloss of the molded article was conducted using the obtained samples (1) to (11). The results are shown in Table 1.

TABLE 1

| Ex. No. | Ex. 1 | Ex. 2 | Ex. 3 | Ex. 4 | Ex. 5 | Ex. 6 | Com. Ex. 1 | Com. Ex. 2 | Com. Ex. 3 | Com. Ex. 4 | Com. Ex. 5 |
|---|---|---|---|---|---|---|---|---|---|---|---|
| Polymer sample No. | (1) | (2) | (3) | (4) | (5) | (6) | (7) | (8) | (9) | (10) | (11) |
| Composition (part(s)) | | | | | | | | | | | |
| Monomer mixture of first step | | | | | | | | | | | |
| GMA | 15 | 20 | 40 | 65 | 90 | 90 | 1.5 | 5 | 10 | 12 | 100 |
| MMA | 60 | 56 | 40 | 20 | – | 3 | 70.8 | 68 | 64 | 62 | – |
| BA | 15 | 14 | 10 | 5 | – | 7 | 17.7 | 17 | 16 | 16 | – |
| Monomer mixture of second step | | | | | | | | | | | |
| MMA | 3 | 3 | 3 | 3 | 3 | – | 3 | 3 | 3 | 3 | – |
| BA | 7 | 7 | 7 | 7 | 7 | – | 7 | 7 | 7 | 7 | – |
| Chain transfer agent | | | | | | | | | | | |
| TDM | 1.0 | 1.0 | 1.0 | 1.0 | 1.0 | 1.0 | 1.0 | 1.0 | 1.0 | 1.0 | 1.0 |
| Evaluation results | | | | | | | | | | | |
| Polymerization conversion ratio (%) | 99.8 | 99.2 | 99.4 | 99.3 | 99.3 | 99.4 | 99.3 | 99.8 | 99.6 | 99.5 | 99.1 |
| Weight average molecular weight of polymer | 50000 | 51000 | 52000 | 49000 | 51000 | 51000 | 53000 | 50000 | 52000 | 51000 | 50000 |
| Anti-draw down effect (cm) | 30 | 31 | 35 | 37 | 30 | 30 | 8 | 10 | 13 | 15 | 25 |
| Surface gloss of molded article (%) | 93.1 | 92.4 | 91.2 | 89.4 | 92.7 | 93.1 | – | – | – | – | 38.0 |

EP 1 577 345 A1

As indicated by the results of Table 1, a composition having favorable anti-draw down effect and surface gloss of the molded article is obtained in Examples 1 to 6, in which the composition ratio of GMA in the monomer mixture is within the range of 15 to 95 % by weight, as in samples (1) to (6). In contrast, in Comparative Examples 1 to 4 wherein samples (7) to (10) containing less than 15 % by weight of GMA are used, the anti-draw down effect was found to decrease. Also, in Comparative Example 5 wherein sample (11) containing more than 95 % by weight of GMA is used, surface gloss of the molded article was found to become poor.

EXAMPLES 7 to 11 and COMPARATIVE EXAMPLES 6 to 10

The weight average molecular weight was adjusted to about 150,000 by adding 0.5 part of the chain transfer agent TDM. The two-step polymer samples (12) to (20) were obtained in the same manner as in Example 1, except that the composition ratio of GMA, MMA and BA was as shown in Table 2. Also, a one-step polymer sample (21) was obtained in the same manner as in Example 6. Evaluation of the anti-draw down effect and surface gloss of the molded article was conducted using the obtained samples. The results are shown in Table 2.

TABLE 2

| Ex. No. | Ex. 7 | Ex. 8 | Ex. 9 | Ex. 10 | Ex. 11 | Com. Ex. 6 | Com. Ex. 7 | Com. Ex. 8 | Com. Ex. 9 | Com. Ex. 10 |
|---|---|---|---|---|---|---|---|---|---|---|
| Polymer sample No. | (12) | (13) | (14) | (15) | (16) | (17) | (18) | (19) | (20) | (21) |
| Composition (part(s)) | | | | | | | | | | |
| Monomer mixture of first step | | | | | | | | | | |
| GMA | 15 | 20 | 40 | 65 | 90 | 1.5 | 5 | 10 | 12 | 100 |
| MMA | 60 | 56 | 40 | 20 | – | 70.8 | 68 | 64 | 62 | – |
| BA | 15 | 14 | 10 | 5 | – | 17.7 | 17 | 16 | 16 | – |
| Monomer mixture of second step | | | | | | | | | | |
| MMA | 3 | 3 | 3 | 3 | 3 | 3 | 3 | 3 | 3 | – |
| BA | 7 | 7 | 7 | 7 | 7 | 7 | 7 | 7 | 7 | – |
| Chain transfer agent | | | | | | | | | | |
| TDM | 0.5 | 0.5 | 0.5 | 0.5 | 0.5 | 0.5 | 0.5 | 0.5 | 0.5 | 0.5 |
| Evaluation results | | | | | | | | | | |
| Polymerization conversion ratio (%) | 99.7 | 99.8 | 99.7 | 99.6 | 99.7 | 99.7 | 99.6 | 99.8 | 99.7 | 99.7 |
| Weight average molecular weight of polymer | 149000 | 150000 | 151000 | 151000 | 150000 | 150000 | 149000 | 152000 | 154000 | 149000 |
| Anti-draw down effect (cm) | 26 | 26 | 27 | 26 | 26 | 8 | 8 | 8 | 9 | 25 |
| Surface gloss of molded article (%) | 94.6 | 95.2 | 94.5 | 95.0 | 94.8 | – | – | – | – | 38.3 |

As indicated by the results of Table 2, a composition having favorable anti-draw down effect and surface gloss of the molded article is obtained in Examples 7 to 11, in which the composition ratio of GMA in the monomer mixture is within the range of 15 to 95 % by weight, as in samples (12) to (16). In contrast, in Comparative Examples 6 to 9 wherein samples (17) to (20) having GMA composition ratio of less than 15 % by weight are used, the anti-draw down effect was found to decrease. Also, in Comparative Example 10 wherein sample (21) having GMA composition ratio of more than 95 % by weight is used, surface gloss of the molded article was found to become poor.

EXAMPLES 12 to 16 and COMPARATIVE EXAMPLES 11 to 15

The weight average molecular weight was adjusted to about 5,000 to 6,000 by adding 20 parts of the chain transfer agent TDM. The two-step polymer samples (22) to (30) were obtained in the same manner as in Example 1, except that the composition ratio of GMA, MMA and BA was as shown in Table 3. Also, a one-step polymer sample (31) was obtained in the same manner as in Example 6. Evaluation of the anti-draw down effect and surface gloss of the molded article was conducted using the obtained samples. The results are shown in Table 3.

TABLE 3

| Ex. No. | Ex. 12 | Ex. 13 | Ex. 14 | Ex. 15 | Ex. 16 | Com. Ex. 11 | Com. Ex. 12 | Com. Ex. 13 | Com. Ex. 14 | Com. Ex. 15 |
|---|---|---|---|---|---|---|---|---|---|---|
| Polymer sample No. | (22) | (23) | (24) | (25) | (26) | (27) | (28) | (29) | (30) | (31) |
| Composition (part(s)) | | | | | | | | | | |
| Monomer mixture of first step | | | | | | | | | | |
| GMA | 15 | 20 | 40 | 65 | 90 | 1.5 | 5 | 10 | 12 | 100 |
| MMA | 60 | 56 | 40 | 20 | – | 70.8 | 68 | 64 | 62 | – |
| BA | 15 | 14 | 10 | 5 | – | 17.7 | 17 | 16 | 16 | – |
| Monomer mixture of second step | | | | | | | | | | |
| MMA | 3 | 3 | 3 | 3 | 3 | 3 | 3 | 3 | 3 | – |
| BA | 7 | 7 | 7 | 7 | 7 | 7 | 7 | 7 | 7 | – |
| Chain transfer agent | | | | | | | | | | |
| TDM | 20 | 20 | 20 | 20 | 20 | 20 | 20 | 20 | 20 | 20 |
| Evaluation results | | | | | | | | | | |
| Polymerization conversion ratio (%) | 99.1 | 99.2 | 99.3 | 99.4 | 99.3 | 99.4 | 99.3 | 99.1 | 99.2 | 99.6 |
| Weight average molecular weight of polymer | 5000 | 5000 | 6000 | 5000 | 5000 | 6000 | 5000 | 6000 | 5000 | 5000 |
| Anti-draw down effect (cm) | 45 | 50 | 110 | 130 | 170 | 8 | 8 | 9 | 9 | 65 |
| Surface gloss of molded article (%) | 84.2 | 82.4 | 81.1 | 80.4 | 60.7 | – | – | – | – | 37.8 |

As indicated by the results of Table 3, a composition having favorable anti-draw down effect and surface gloss of the molded article is obtained in Examples 12 to 16, in which the composition ratio of GMA in the monomer mixture is within the range of 15 to 95 % by weight, as in samples (22) to (26). In contrast, in Comparative Examples 11 to 14 wherein samples (27) to (30) having GMA composition ratio of less than 15 % by weight are used, the anti-draw down effect was found to decrease. Also, in Comparative Example 15 wherein sample (31) having GMA composition ratio of more than 95 % by weight is used, surface gloss of the molded article was found to become poor.

EXAMPLES 17 to 20 and COMPARATIVE EXAMPLES 16 to 18

The samples (32) to (38) having different weight average molecular weight were obtained in the same manner as in Example 1, except that the amount of GMA was fixed to 20 parts and 90 parts and the amount of the chain transfer agent TDM was as shown in Table 4. Evaluation of the anti-draw down effect and surface gloss of the molded article was conducted using the obtained samples. The results are shown in Table 4.

TABLE 4

| Ex. No. | Ex. 17 | Ex. 18 | Ex. 19 | Ex. 20 | Com. Ex. 16 | Com. Ex. 17 | Com. Ex. 18 |
|---|---|---|---|---|---|---|---|
| Polymer sample No. | (32) | (33) | (34) | (35) | (36) | (37) | (38) |
| **Composition (part(s))** | | | | | | | |
| *Monomer mixture of first step* | | | | | | | |
| GMA | 20 | 20 | 90 | 90 | 20 | 90 | 20 |
| MMA | 56 | 56 | – | – | 56 | – | 56 |
| BA | 14 | 14 | – | – | 14 | – | 14 |
| *Monomer mixture of second step* | | | | | | | |
| MMA | 3 | 3 | 3 | 3 | 3 | 3 | 3 |
| BA | 7 | 7 | 7 | 7 | 7 | 7 | 7 |
| *Chain transfer agent* | | | | | | | |
| TDM | 10 | 0.05 | 20 | 0.05 | 30 | 0.02 | 0 |
| **Evaluation results** | | | | | | | |
| Polymerization conversion ratio (%) | 99.4 | 99.7 | 99.6 | 99.7 | 99.3 | 99.7 | 99.6 |
| Weight average molecular weight of polymer | 23000 | 380000 | 22000 | 380000 | 900 | 495000 | 2130000 |
| Anti-draw down effect (cm) | 37 | 22 | 40 | 23 | – | 19 | 14 |
| Surface gloss of molded article (%) | 88.0 | 96.6 | 84.2 | 95.7 | – | – | – |

As indicated by the results of Table 4, a composition having favorable anti-draw down effect and surface gloss of the molded article is obtained in Examples 17 to 20, in which weight average molecular weight of the monomer mixture is within the range of 1,000 to 400,000, as in samples (32) to (35). In contrast, in Comparative Examples 17 to 18 wherein samples (37) and (38) having weight average molecular weight of more than 400,000 are used, the anti-draw down effect was found to decrease. Also, in Comparative Example 16 wherein sample (36) having weight average molecular weight of less than 1,000 is used, evaluation could not be conducted because the polymer could not be isolated from water, which is the polymerization medium, when salting out the latex after polymerization.

EXAMPLES 21 to 26

The samples (39) to (44) were obtained in the same manner as in Example 1, except that the amount of alkyl (meth)acrylate containing an epoxy group was fixed to 40 parts and the monomers were replaced with the types and amounts shown in Table 5. Evaluation of the anti-draw down effect and surface gloss of the molded article was conducted using the obtained samples. The results are shown in Table 5.

TABLE 5

| Ex. No. | Ex. 21 | Ex. 22 | Ex. 23 | Ex. 24 | Ex. 25 | Ex. 26 |
|---|---|---|---|---|---|---|
| Polymer sample No. | (39) | (40) | (41) | (42) | (43) | (44) |
| **Composition (part(s))** | | | | | | |
| Monomer mixture of first step | | | | | | |
| GMA | – | 40 | 40 | 40 | 40 | 40 |
| GA | 40 | – | – | – | – | – |
| MMA | 40 | 40 | 45 | 40 | – | 50 |
| BA | 10 | – | 5 | – | – | – |
| BMA | – | 10 | – | – | – | – |
| ST | – | – | – | 10 | 25 | – |
| AN | – | – | – | – | 25 | – |
| Monomer mixture of second step | | | | | | |
| MMA | 3 | 3 | 3 | 3 | 3 | 3 |
| BA | 7 | 7 | 7 | 7 | 7 | 7 |
| Chain transfer agent | | | | | | |
| TDM | 1.0 | 1.0 | 1.0 | 1.0 | 1.0 | 1.0 |
| **Evaluation results** | | | | | | |
| Polymerization conversion ratio (%) | 99.8 | 99.7 | 99.7 | 99.8 | 99.4 | 99.7 |
| Weight average molecular weight of polymer | 53000 | 55000 | 52000 | 50000 | 50000 | 49000 |
| Anti-draw down effect (cm) | 34 | 35 | 34 | 29 | 28 | 32 |
| Surface gloss of molded article (%) | 90.2 | 89.8 | 90.1 | 94.0 | 93.1 | 91.0 |

As indicated by the results of Table 5, a composition having favorable anti-draw down effect and surface gloss of the molded article is obtained in Examples 21 to 26, in which the types and amounts of the monomers are within the range of the present invention, as in samples (39) to (44).

EXAMPLES 27 to 30 and COMPARATIVE EXAMPLES 19 to 23

The weight average molecular weight was adjusted to about 50,000 by adding 1.0 part of the chain transfer agent TDM. The one-step polymer samples (45) to (53) were obtained in the same manner as in Example 6, except that the monomers were replaced with the types and amounts shown in Table 6. Evaluation of the anti-draw down effect and surface gloss of the molded article was conducted using the obtained samples. The results are shown in Table 6.

TABLE 6

| Ex. No. | Ex. 27 | Ex. 28 | Ex. 29 | Ex. 30 | Com. Ex. 19 | Com. Ex. 20 | Com. Ex. 21 | Com. Ex. 22 | Com. Ex. 23 |
|---|---|---|---|---|---|---|---|---|---|
| Polymer sample No. | (45) | (46) | (47) | (48) | (49) | (50) | (51) | (52) | (53) |
| Composition (part(s)) | | | | | | | | | |
| Monomer mixture of first step | | | | | | | | | |
| GMA | 18 | 18 | 18 | 18 | 18 | 18 | 18 | 40 | 90 |
| MMA | 3 | 3 | 45 | 75 | - | - | - | - | - |
| BA | 7 | 7 | 7 | 7 | - | - | - | - | - |
| ST | 72 | - | 30 | - | - | - | 41 | 60 | 10 |
| AN | - | 72 | - | - | - | - | 41 | - | - |
| ET | - | - | - | - | 82 | 72 | - | - | - |
| VA | - | - | - | - | - | 10 | - | - | - |
| Chain transfer agent | | | | | | | | | |
| TDM | 1.0 | 1.0 | 1.0 | 1.0 | 1.0 | 1.0 | 1.0 | 1.0 | 1.0 |
| Evaluation results | | | | | | | | | |
| Polymerization conversion ratio (%) | 99.2 | 99.4 | 99.7 | 99.7 | 99.3 | 99.2 | 99.6 | 99.2 | 99.1 |
| Weight average molecular weight of polymer | 52000 | 53000 | 53000 | 51000 | 49000 | 49000 | 49000 | 49000 | 48000 |
| Anti-draw down effect (cm) | 26 | 25 | 31 | 31 | 12 | 13 | 13 | 20 | 24 |
| Surface gloss of molded article (%) | 95.0 | 95.8 | 92.4 | 92.6 | - | - | - | - | - |

As indicated by the results of Table 6, a composition having favorable anti-draw down effect and surface gloss of the molded article is obtained in Examples 27 to 30, in which samples (45) to (48) wherein the amount of the alkyl (meth)acrylate (b) other than the alkyl (meth)acrylate containing an epoxy group is within the range of 5 to 85 % by weight are used. In contrast, in Comparative Examples 19 to 23, in which samples (49) and (53) wherein the amount

16

of the alkyl (meth)acrylate (b) other than the alkyl (meth)acrylate containing an epoxy group is less than 5 % by weight, the anti-draw down effect was found to decrease.

EXAMPLES 31 to 36, COMPARATIVE EXAMPLES 24 and 25 and REFERENCE EXAMPLE 1

In the above process for preparing pellets, sample (3) obtained in Example 3 was mixed with thermoplastic polyester resin in the composition ratio shown in Table 7, instead of mixing 100 parts by weight of thermoplastic polyester resin and 5 parts by weight of the polymer sample, and the anti-draw down effect and surface gloss of the molded article were evaluated. As Reference Example 1, evaluation was conducted without adding any of the samples. The results are shown in Table 7.

TABLE 7

| Ex. No. | Ex. 31 | Ex. 32 | Ex. 33 | Ex. 34 | Ex. 35 | Ex. 36 | Com. Ex. 24 | Com. Ex. 25 | Com. Ref. 1 |
|---|---|---|---|---|---|---|---|---|---|
| Polymer sample No. | (3) | (3) | (3) | (3) | (3) | (3) | (3) | (3) | (3) |
| Amount of polymer sample (part(s)) | 0.3 | 3 | 8 | 15 | 20 | 45 | 0.05 | 60 | 0 |
| Evaluation results | | | | | | | | | |
| Anti-draw down effect (cm) | 25 | 30 | 50 | 72 | 85 | 110 | 8 | 130 | 7 |
| Surface gloss of molded article (%) | 96.9 | 91.0 | 88.0 | 82.3 | 78.8 | 68.9 | – | 38.5 | – |

As indicated by the results of Table 7, a composition having favorable anti-draw down effect and surface gloss of the molded article is obtained in Examples 31 to 36, in which the composition ratio of the polymer sample is within the range of 0.1 to 50 parts. In contrast, in Comparative Examples 24, in which the composition ratio of the polymer sample is less than 0.1 part, the anti-draw down effect was insufficient. Also, in Comparative Example 25, in which the amount is more than 50 parts, surface gloss of the molded article was found to become poor.

INDUSTRIAL APPLICABILITY

The viscosity modifier for thermoplastic polyester resin of the present invention can significantly increase the melt viscosity of thermoplastic polyester resin. The thermoplastic polyester resin composition containing the viscosity modifier for thermoplastic polyester resin enables stable processing in extrusion molding, blow molding and calender molding, particularly profile extrusion and extrusion molding of boards and pipes which are extremely difficult, and the surface properties of the molded article obtained therefrom are improved.

**Claims**

1.  A viscosity modifier for thermoplastic polyester resin comprising

     (a) 15 to 95 % by weight of alkyl (meth)acrylate containing an epoxy group,
     (b) 5 to 85 % by weight of another alkyl (meth)acrylate and
     (c) 0 to 80 % by weight of another vinyl monomer copolymerizable therewith; and

     having weight average molecular weight of 1,000 to 400,000.

2.  A thermoplastic polyester resin composition comprising 0.1 to 50 parts by weight of the viscosity modifier for thermoplastic polyester resin of Claim 1, based on 100 parts by weight of a thermoplastic polyester resin.

3.  A molded article comprising the thermoplastic polyester resin composition of Claim 2.

4.  A molded article obtained by extrusion molding the thermoplastic polyester resin composition of Claim 2.

### INTERNATIONAL SEARCH REPORT

| International application No. |
|---|
| PCT/JP03/13761 |

| A. CLASSIFICATION OF SUBJECT MATTER |
|---|
| $Int.Cl^7$ C08L67/00 |
| According to International Patent Classification (IPC) or to both national classification and IPC |

| B. FIELDS SEARCHED |
|---|
| Minimum documentation searched (classification system followed by classification symbols) |
| $Int.Cl^7$ C08L67/00-67/04 |

Documentation searched other than minimum documentation to the extent that such documents are included in the fields searched

| Jitsuyo Shinan Koho | 1926–2003 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2001-98145 A (Nippon Shokubai Co., Ltd.), 10 April, 2001 (10.04.01), Column 1, lines 2 to 31; column 5, lines 12 to 38 (Family: none) | 1-4 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 November, 2003 (13.11.03) | 25 November, 2003 (25.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)